# EUROPÄISCHE PATENTANMELDUNG

(11) **EP 1 947 817 A2**
(43) Veröffentlichungstag der Anmeldung: **23.07.2008**
(21) Anmeldenummer: 08000616.6
(22) Anmeldetag: 15.01.2008
(51) Int. Cl.: H04L 27/38

(54) **Vorrichtung und Verfahren zum Bestimmen einer Konstellation eines quadraturamplitudenmodulierten Signals**

(30) Priorität: 16.01.2007 DE 102007003105
(71) Anmelder: Micronas GmbH, 79108 Freiburg (DE)
(72) Erfinder: Bock, Christian, 79108 Freiburg (DE)
(74) Vertreter: Göhring, Robert

(57) **Zusammenfassung**

Die Erfindung bezieht sich auf ein Verfahren bzw. auf eine Vorrichtung zum Bestimmen einer Konstellation (16-QAM; 32-QAM;...) aus einer Vielzahl möglicher Konstellationen (QPSK, 16-QAM, 32-QAM, ...) mit einer Konstellationserkennungs-Einrichtung (15) zum Bestimmen der Konstellation des Signals (s) aus der Vielzahl der möglichen Konstellationen. Vorteilhaft wird dies dadurch erreicht, dass ein Umsetzer (8) angeordnet ist zum Umsetzen des Signals (s) in polare Koordinaten (r, Φ) mit einem radialen Anteil und zum Bereitstellen eines Radius (r) als radialem Anteil des Signals (s) und dass die Konstellationserkennungs-Einrichtung (15) ausgebildet ist, aus dem Radius (r) die Konstellation (16-QAM; 32-QAM; ...), des Signals (s) zu bestimmen.

## Beschreibung

Die Erfindung bezieht sich auf eine Vorrichtung zum Bestimmen einer Konstellation eines quadraturamplitudenmodulierten Signals aus einer Vielzahl bzw. auf ein entsprechendes Verfahren zum Bestimmen einer Konstellation.

EP 0 639 915 B1 beschreibt eine Vorrichtung und ein Verfahren zum Feststellen der Konstellationsgröße eines quadraturamplitudenmodulierten Signals, wobei das Signal eine Größe aus einer Mehrzahl von Konstellationsgrößen enthält. Zur Bestimmung der Konstellation dient eine Konstellationserkennungs-Einrichtung, welche ausgebildet ist, eine Leistungsverteilung des auf Leistung normierten quadraturamplitudenmodulierten Signals zu bestimmen, zu analysieren und daraus auf das verwendete QAM-Alphabet (QAM: Quadratur amplitude modulation) bzw. der Konstellation zu schließen. Die Konstellationserkennungs-Einrichtung umfasst Mittel zum Quadrieren einer Größe des QAM-Signals als dem quadraturamplitudenmodulierten Eingangssignal und zum Erzeugen eines größenquadrierten QAM-Signals. Außerdem umfasst sie Mittel, die mit den Quadrierungsmitteln verbunden sind, zum Analysieren einer Wahrscheinlichkeitsdichte-Funktion des QAM-Signals durch Prüfen des größenquadrierten QAM-Signals mit dem Ziel, die Konstellationsgröße bzw. Konstellation des gerade empfangenen QAM-Signals festzustellen. Weiterhin umfasst sie Mittel, die an die Analysemittel angeschlossen sind, um eine Dauer zu bestimmen, während der die Analysemittel das QAM-Signal analysieren. Mittel, die an die Analysemittel und die Dauer-Bestimmungsmittel angeschlossen sind, dienen zum Erzeugen eines Signals, das für die Konstellationsgröße des gerade empfangenen QAM-Signals kennzeichnend ist. Mittels weiterer Verfahrensschritte und Komponenten, insbesondere einer Anzahl von Zählern, wird auf Basis des größenquadrierten QAM-Signals auf die Konstellation geschlossen, welche dem empfangenen bzw. eingegebenen Signal zugrunde liegt.

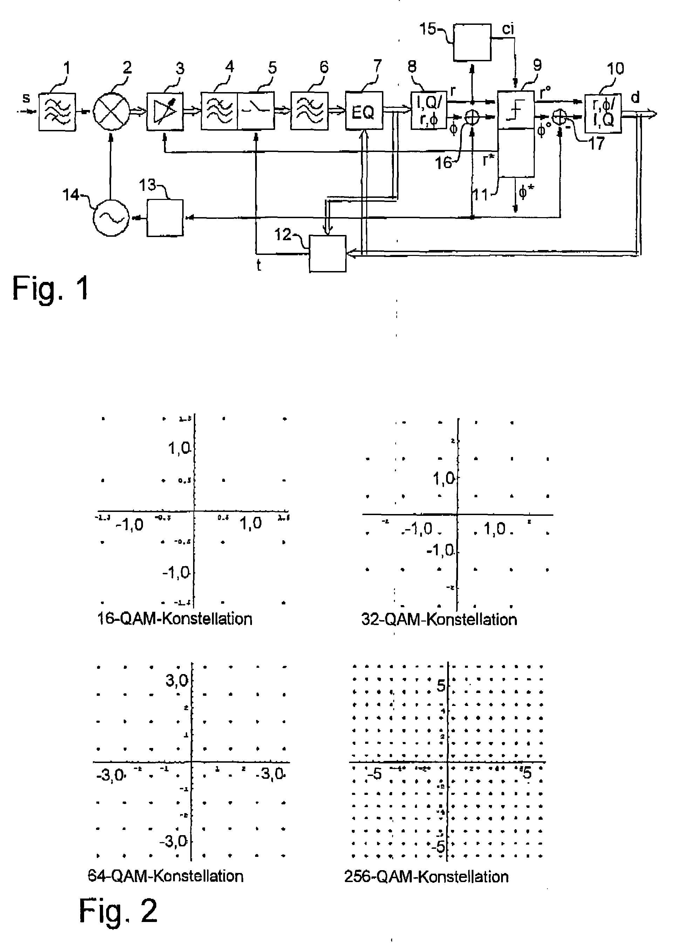

Letztendlich wird dabei berücksichtigt, dass alle Konstellationen, wie anschaulich auch anhand Fig. 2 erkennbar ist, jeweils einen Erwartungswert für die Leistung bzw. mittlere Leistung und die Amplitude bzw. mittlere Amplitude haben. Durch die Quadrierung der I- und Q-Komponenten des quadraturamplitudenmodulierten Signals wird somit die jeweilige Leistung des empfangenen und abgetasteten Signals bestimmt, um nachfolgend mittels Vergleich mit den Erwartungswerten verschiedener der möglichen Konstellationen auf die dem Signal zugrunde liegende Konstellation schließen zu können.

Nachteilhaft ist dabei der rechentechnische Aufwand bei der Quadrierung der I- und Q-Komponenten des quadraturamplitudenmodulierten Signals, um die Leistung p = (x² + y²) des Signals zu bestimmen.

Allgemein bekannt sind außerdem verschiedenartige Anordnungen und Verfahren zur Übertragung von digitalen Signalen mit Quadraturamplitudenmodulation, typische Empfängerkonzepte mit komplexer Abwärtsmischung ins Basisband, Amplituden, Trägerfrequenz-/Trägerphasen- und Abtastregelung.

Allgemein bekannt ist außerdem'aus DE 103 44 756 A1 ein Verfahren bzw. eine Schaltungsanordnung zum Entscheiden eines Symbols beim Empfang eines mit einem Quadratur-Signalpaar gekoppelten Signals. Dabei wird die Entscheidung durch Analyse des Abstandes zumindest eines Empfangspunktes zu zumindest einem Sollpunkt im komplexen Koordinatenraum getroffen. Dabei wird der Abstand im nicht- oder nicht ausschließlich kartesischen Komplexen Koordinatenraum analysiert und daraufhin die Entscheidung getroffen. Insbesondere wird der Abstand im polaren Koordinatenraum analysiert. Dazu wird der kartesische Koordinatenraum bzw. das in diesem empfangene digitale Signal in den polaren Koordinatenraum transformiert und im polaren Koordinatenraum die Analyse der Abstände durchgeführt. Abschließend wird eine Rücktransformation in den kartesischen Raum durchgeführt, um ein entschiedenes Symbol im kartesischen Raum an einem Ausgang einer entsprechenden Schaltungsanordnung bereitstellen zu können.

Beispielhaft besteht eine solche Anordnung aus einer Abfolge von Einzelkomponenten eines für sich bekannten QAM-Empfängers mit Mischung ins Basisband, wobei aufeinander folgend nach der Mischung ins Basisband eine automatische Verstärkungssteuerung, eine Abtastung, eine Filterung in einem Nyquist-Filter und in einem Equalizer sowie eine Koordinatenumsetzung in einem CORDIC durchgeführt wird. Die Abfolge einer Vielzahl dieser Verarbeitungsschritte sowie gegebenenfalls auch weiterer Verarbeitungsschritte vor dem CORDIC kann dabei optional auch in anderer Reihenfolge durchgeführt werden oder gegebenenfalls auch entfallen.

Die Aufgabe der Erfindung besteht darin, eine Vorrichtung bzw. ein Verfahren vorzuschlagen, welche eine einfachere Bestimmung einer Konstellation eines quadraturamplitudenmodulierten Signal5 aus einer Vielzahl möglicher Konstellationen mit geringerem Verarbeitungsaufwand und mit geringerem konstruktiven Aufwand ermöglicht. Dabei soll vorzugsweise auf in einer Schaltungsanordnung bereits vorhandene Komponenten zurückgegriffen werden, so dass für die eigentliche Konstellationsbestimmung nur möglichst wenig und einfach ausgestaltete Komponenten bzw. Verfahrensschritte erforderlich sind.

Diese Aufgabe wird durch eine Vorrichtung zum Bestimmen einer Konstellation eines quadraturamplitudenmodulierten Signals aus einer Vielzahl möglicher Konstellationen mit den Merkmalen gemäß Patentanspruch 1 bzw. durch ein Verfahren mit den Merkmalen gemäß Patentanspruch 6 gelöst. Vorteilhafte Ausgestaltungen sind Gegenstand abhängiger Ansprüche.

Bevorzugt wird demgemäß eine Vorrichtung zum Bestimmen einer Konstellation eines quadraturamplitudenmodulierten Signals aus einer Vielzahl möglicher Konstellationen, wobei eine solche Vorrichtung eine Konstellationserkennungs-Einrichtung zum Bestimmen der Konstellation aufweist und einen Umsetzer aufweist, der in der Vorrichtung zum Umsetzen des Signals in polare Koordinaten und zum Bereitstellen eines Radius als radialem Anteil des Signals angeordnet ist, und wobei die Konstellationserkennungs-Einrichtung ausgebildet ist, aus der Verteilung der Radien des abgetasteten Signals das Konstellationsalphabet des Signals zu bestimmen.

Mit anderen Worten wird aus lediglich einer einzigen Komponente des komplexwertigen quadraturamplitudenmodulierten Signals auf die Konstellation des Signals geschlossen. Dabei ist unter der Konstellation insbesondere die Konstellationsgröße zu verstehen, das heißt, ob das quadraturamplituden-modulierte Signal auf z. B. einer 16-QAM-Konstellation, einer 32-QAM-Konstellation, einer 64-QAM-Konstellation etc. beruht. Unter einer Vorrichtung zum Bestimmen einer Konstellation ist insbesondere eine Schaltungsanordnung zu verstehen, welche eine Vielzahl einzelner Schaltungskomponenten zur Signalverarbeitung umfasst, wie dies für sich genommen bekannt ist. Unter der Vielzahl möglicher Konstellationen sind diejenigen Konstellationen zu verstehen, welche zu den gemäß dem für das zu verarbeitende quadraturamplituden-modulierte Signal üblicherweise zu verwendenden Quadraturamplituden-Modulationen zählen. Dies sind insbesondere 16-QAM, 32-QAM, 64-QAM,128-QAM und 256-QAM, wobei jedoch prinzipiell eine Anwendung auch für kleiner-oder größerwertige QAM-Konstellationen bzw. auch QPSK möglich ist.

Bevorzugt wird entsprechend verfahrensgemäß ein Verfahren zum Bestimmen einer Konstellation eines quadraturamplitudenmodulierten Signals aus einer Vielzahl möglicher Konstellationen, wobei das Signal aus einem kartesischen Koordinatenraum in einen radialen Anteil aufweisende, insbesondere polare Koordinaten umgesetzt wird und ein Radius als radialer Anteil des Signals bereitgestellt wird und aus der Verteilung der Radien die Konstellation des Signals bestimmt wird.

Vorzugsweise ist bei einer derartigen Vorrichtung der Umsetzer als ein CORDIC ausgebildet, welcher eine einfache und wenig aufwendige Umsetzung des quadraturamplitudenmodulierten Signals bzw. von dessen I- und Q-Komponenten in den komplexwertigen Raum mit den Polarkoordinaten, das heißt einem Radius und einer Phase, ermöglicht. Verfahrensgemäß erfolgt somit bevorzugt die Umsetzung mittels eines CORDIC. Andere Verfahren, z. B. eine Tabelle, sind möglich.

Vorteilhaft ist, wenn ein Abgriff vor einem Entscheider angeordnet ist, zum Anlegen des Radius an die Konstellationserkennungs-Einrichtung, so dass der Radius vor dem Zuführen zu einem Entscheider abgegriffen und der Konstellationserkennungs-Einrichtung zugeführt wird. Vorzugsweise ist außerdem ein Ausgang der Konstellationserkennungs-Einrichtung an den Entscheider angelegt zum Anlegen einer mittels der Konstellationserkennungs-Einrichtung bestimmten Konstellationsinformation zur Berücksichtigung beim Entscheiden eines Symbols. Durch eine solche Anordnung wird in dem Entscheider mit vorzugsweise nur geringem zeitlichem Versatz oder gegebenenfalls, insbesondere bei Zwischenschaltung eines Verzögerungselements beim Zuführen des Radius zum Entscheider, eine Symbolbestimmung mit bereits korrekter Konstellation in dem Entscheider ermöglicht.

Bevorzugt wird eine Vorrichtung bzw. Schaltungsanordnung mit einer Verstärkungsregeleinrichtung zum Regeln des quadraturamplitudenmodulierten Signals oder gegebenenfalls vorverarbeiteten Signals auf einen mittleren Radiuswert. Sind durch insbesondere eine automatische Verstärkungsregelung alle möglichen Eingangssignale auf einen mittleren Radius normiert, sind verschiedene Konstellationen auf einfache Art und Weise durch verschiedene Verteilungen auf der Radiusachse bei einer Auftragung der Radienwerte über der Radiusachse leicht unterscheidbar.

Vorteilhaft kann dabei die Konstellation eines Verteilungsmusters der möglichen Konstellationen über einer solchen Radiusachse bestimmt werden. Zusätzlich oder vorzugsweise alternativ kann die Konstellation anhand einer Korrelation mit Korrelationsmustern der möglichen Konstellationen bestimmt werden.

Vorteilhaft kann die Auswertung bzw. die Bestimmung der Konstellation durch Auszählung von Bin-Populationen bestimmter bzw. vorgegebener Amplitudenbereiche relativ zu den anderen Amplitudenbereichen bestimmt werden.

Eine Anwendung einer solchen Verfahrensweise bzw. einer Umsetzung einer derartigen Vorrichtung kann in Verbindung mit komplexen digitalen Modulationsverfahren wie QAM erfolgen. Derartige Verfahren bzw. Vorrichtungen werden bei den meisten neuen Rundfunk-, Fernseh- und Datendiensten über Kabel und teilweise auch in Verbindung mit terrestrischer Übertragung benutzt. Im Wesentlichen kann eine Umsetzung insbesondere in Verbindung mit für sich bekannten Schaltungsanordnungen und Verfahren erfolgen, bei denen ein quadraturamplitudenmoduliertes Signal zur weiteren Auswertung, insbesondere zur Entscheidung eines Symbols sowieso in einen Raum mit einer Radius-Komponente umgesetzt bzw. transformiert wird. Bei derartigen Schaltungsanordnungen bzw. Vorrichtungen ist lediglich eine einfach ausgestaltete Konstellationserkenriungs-Einrichtung hinzuzufügen. Optional können auch entsprechende Auswertungen in diesbezüglich geeignet ausgestalteten und/oder programmierten Prozessoren durchgeführt werden. Hinsichtlich der Reihenfolge und Ausgestaltung weiterer das quadraturamplituden-modulierte Signal verarbeitende Komponenten kann sowohl auf eine Vielzahl verschiedenartiger für sich bekannter Ausgestaltungen sowie auch zukünftiger weiterer Ausgestaltungen zugegriffen werden.

Ein Ausführungsbeispiel der Erfindung wird nachfolgend anhand der Zeichnung näher erläutert. Es zeigen:
- Fig. 1: eine lediglich beispielhafte Schaltungsanordnung zur Verarbeitung eines quadraturamplitudenmodulierten Signals, welche unter anderem eine Konstellationserkennungs-Einrichtung; umfasst,
- Fig. 2: vier beispielhafte QAM-Konstellationen in der komplexen I-/Q-Ebene in kartesischer Koordinatendarstellung,
- Fig. 3: zueinander überlagert normierte Radienverteilungen von QPSK, 16-QAM, 32-QAM, 64-QAM, 128-QAM und 256-QAM und
- Fig. 4: entsprechende Radienverteilungen für die einzelnen der in Fig. 3 überlagert dargestellten Amplituden-Modulationen hinsichtlich deren Radienverteilungen.

Fig. 1 zeigt eine lediglich beispielhafte Anordnung von Komponenten einer Vorrichtung zum Verarbeiten eines quadraturamplitudenmodulierten Signals s. Das Signal s wird dabei als digitales oder digitalisiertes Signal s einem Bandpassfilter 1 zur Sandpassfilterung angelegt. Das bandpassgefilterte Signal des Bandpassfilters 1 wird einem Mischer 2 angelegt, welcher ein komplexwertiges Signal im kartesischen Koordinatenraum mit einer I- und einer Q-Komponente in für sich bekannter Art und Weise ausgibt. Das vom Mischer 2 ausgegebene Signal wird einer Verstärkungsregeleinrichtung 3 angelegt, welche abhängig von einem anliegenden Regelsignal ein Ausgangssignal erzeugt, welches einem Tiefpassfilter 4 angelegt wird. Ein mittels des Tiefpassfilters bandbegrenztes Signal wird einer Abtasteinrichtung 5 angelegt, welcher als Abtastsignal ein Taktsignal t angelegt wird. Das von der Abtasteinrichtung 5 ausgegebene Signal wird einem weiteren Tiefpassfilter 6 angelegt, dessen Ausgangssignal einem Equalizer EQ, 7 angelegt wird.

Das Ausgangssignal des Equalizers 7 wird einem Umsetzer 8 angelegt, welcher zum Umsetzen des Signals aus dem kartesischen Koordinatenraum I, Q in einen Koordinatenraum mit zumindest einer radialen Komponente ausgebildet ist. Der Umsetzer 8 ist vorzugsweise ein CORDIC bzw. durch einen CORDIC-Algorithmus (COordinate Rotation Digital Computer) umgesetzt. Der Umsetzer 8 gibt entsprechend das Signal in polaren Koordinaten als Radius r und Phase Φ aus.

Der Radius r wird direkt einem Entscheider 9 angelegt. Die Phase wird einem Addierer 16 angelegt, dessen Ausgangswert dem Entscheider 9 angelegt wird. Der Entscheider 9 dient als ein Symbol-Entscheider zum Entscheiden von Symbolen des der Schaltungsanordnung angelegten Signals s. Ausgegeben werden vom Entscheider 9 entsprechend ein Radius r° und eine Phase Φ° eines derart entschiedenen Symbols. Die Phase Φ° des entschiedenen Symbols wird einem weiteren Addierer 17 angelegt, dessen Additions- bzw. Subtraktionsergebnis einem zweiten Umsetzer 10 angelegt wird. Dem zweiten Umsetzer 10 wird außerdem der Radius r° des entschiedenen Symbols angelegt. Der zweite Umsetzer 10, welcher vorzugsweise ebenfalls als ein CORDIC ausgebildet ist, dient zur Umsetzung der polaren Koordinaten in kartesische Koordinaten und zum Bereitstellen des entschiedenen Symbols d an einem Ausgang.

Bei der dargestellten beispielhaften Anordnung von Komponenten ist dem Entscheider 9 eine Amplituden-/Phasen-Steuereinrichtung zugeordnet, welche in für sich bekannter Art und Weise als Regelwerte eine radiale Regelgröße r* und eine Phasenregelgröße Φ* ausgibt. Die radiale Regelgröße r* wird bei der dargestellten Ausführungsform der Verstärkungsregeleinrichtung 3 zur Regelung einer Amplitude des dieser anliegenden Signals angelegt. Die Phasenregelgröße Φ* wird als weiterer Additionswert dem ersten Addierer 16 und zusätzlich einer Frequenz-Steuereinrichtung 13 angelegt. Außerdem wird die Phasenregelgröße Φ* dem zweiten Addierer 17 zur Subtraktion, das heißt zu einer Gegenrotation durch Winkel-Subtraktion angelegt.

Die Frequenz-Steuereinrichtung bestimmt ein Steuersignal, welches einem Oszillator 14 angelegt wird. Das Ausgangssignal des derart angesteuerten Oszillators 14 wird dem Mischer 2 zum Mischen mit dem Eingangssignal, das heißt beispielhaft dem bandpass-gefilterten Signal s angelegt. Als weitere Regelgröße wird das vom Equalizer 7 ausgegebene Signal einer Taktsteuereinrichtung 12 angelegt, welche das Taktsignal als Takt t für die Abtasteinrichtung 5 bereitstellt. Der Taktsteuereinrichtung 12 wird als weitere Steuergröße das entschiedene Symbol d angelegt. Das entschiedene Symbol bzw. über die Zeit betrachtet eine entsprechende Abfolge von entschiedenen Symbolen d wird außerdem als Steuer- bzw. Regelgröße dem Equalizer 7 angelegt.

In üblicher Art und Weise können die vorstehend beschriebenen Komponenten und Verarbeitungsschritte modifiziert werden, insbesondere untereinander ausgetauscht werden oder durch andere für sich bekannte Komponenten und Verfahrensschritte ergänzt werden. Optional können auch einzelne, der beschriebenen Komponenten und Verfahrensschritte weggelassen oder durch andersartige Komponenten bzw. Verfahrensschritte ersetzt werden, wie dies für sich genommen für die Verarbeitung von quadraturamplitudenmodulierten Signalen bekannt ist.

Zur Bestimmung einer zutreffenden Konstellation der dem Signal s zugrunde liegenden Konstellation aus einer Vielzahl möglicher Konstellationen weist die Anordnung eine Konstellationserkennungs-Einrichtung 15 auf. Der Konstellationserkennungs-Einrichtung 15 wird der Radius r angelegt, welcher von dem ersten Umsetzer 8 ausgegeben wird. Vorzugsweise wird der Radius r dabei über einen Abgriff vor dem Entscheider 9 abgegriffen und der Konstellationserkennungs-Einrichtung 15 angelegt. Die Konstellationserkennungs-Einrichtung 15 ist ausgebildet und/oder gesteuert, eine Konstellationsinformation ci zu bestimmen, welche dem Konstellationsalphabet entspricht, welche dem Signal s zugrunde liegt. Dabei ist unter der Konstellation begrifflich auch eine so genannte Konstellationsgröße zu verstehen.

Bei der dargestellten Ausführungsform wird die Konstellationsinformation ci dem Entscheider 9 angelegt, so dass dieser bei dem Entscheidungsprozess die Information der dem Signal zugrunde liegenden Konstellation kennt und entsprechend gezielt nach zu entscheidenden Symbolen der entsprechend signalisierten Konstellationsinformation ci suchen kann.

Während die beispielhafte Anordnung einen Entscheider 9 aufweist, welcher einen mittels der Fhasenregelgröße Φ* korrigierten Phasenwert Φ angelegt bekommt und eine Verarbeitung im polaren Koordinatenraum vornimmt, können auch andersartige Schaltungsanordnungen bzw. Verfahrensweisen auf Grundlage einer derartigen Konstellationsbestimmung umgesetzt werden. So könnte theoretisch sogar eine Entscheidung im kartesischen Koordinatenraum durchgeführt werden, wenn beispielsweise das quadraturamplituden-modulierte Signal s mittels einer Koordinatenumsetzung zur Bestimmung des Radius r in einem abzweigenden Verarbeitungspfad bestimmt wird, um den Radius r für eine entsprechende Verarbeitung zur Konstellationserkennung bereitzustellen. In einem solchen Fall würde eine Gegenrotation, insbesondere eine Gegenrotation durch Winkel-Subtraktion und ein zweiter CORDIC oder der Einsatz einer Tabelle zur Generierung kartesischer Koordinaten des entschiedenen Signals gegebenenfalls vollständig entfallen können.

Modifikationen sind in vielfältiger Art und Weise möglich. Beispielsweise kann die Abtastung auch vor dem Herabmischen erfolgen, im Falle einer nicht-symbolsynchronen Abtastung auch durch eine erneute Abtastung in der digitalen Domäne. Letztendlich entscheidend ist der Grundgedanke, dass ein Radiussignal in Form des Radius r bestimmt und einer Konstellationserkennungs-Einheit zugeführt wird, welche die Radienverteilung analysiert.

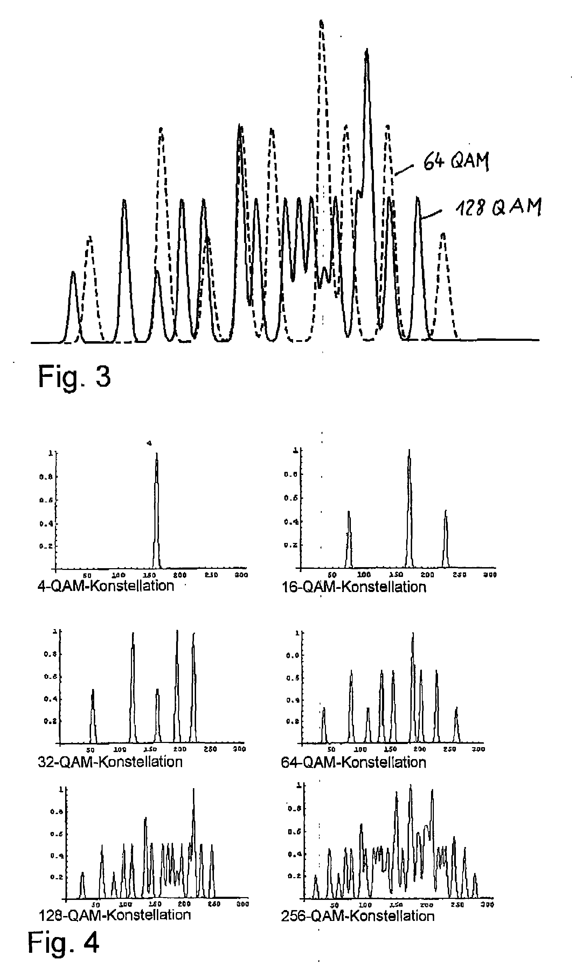

Fig. 3 zeigt beispielhaft verschiedene Radienverteilungen auf der Radiusachse, wobei die Eingangssignale mittels einer automatischen Verstärkungssteuerung durch die Verstärkungsregelungs-Einrichtung 3 beispielhaft auf einen mittleren Radius normiert sind. Die verschiedenen möglichen Konstellationen sind durch verschiedene Verteilungen auf der Radiusachse leicht unterscheidbar.

Die Auswertung in der Konstellationserkennungs-Einrichtung 15 bzw. durch ein entsprechendes Auswerteverfahren kann durch eine Korrelation mit bekannten Mustern oder durch Auszählung der Population in Bins, das heißt unter Berücksichtigung bestimmter bzw. vorgegebener Amplitudenbereiche, im Vergleich zu anderen erfolgen. Zur Veranschaulichung der deutlichen Verschiedenartigkeit der amplitudennormierten Radienverteilungen über der Radiusachse sind beispielhaft anhand Fig. 4 sechs verschiedene Konstellationen jeweils einzeln dargestellt.

## Patentansprüche

1. Vorrichtung zum Bestimmen einer Konstellation (16-QAM; 32-QAM;...) aus einer Vielzahl möglicher Konstellationen (QPSK, 16-QAM, 32-QAM, ...) mit
- einer Konstellationserkennungs-Einrichtung (15) zum Bestimmen der Konstellation des Signals (s) : aus der Vielzahl der möglichen Konstellationen,
**dadurch gekennzeichnet, dass**
- ein Umsetzer (8) angeordnet ist zum Umsetzen des Signals (s) in Koordinaten, insbesondere in polare Koordinaten (r, Φ), mit einem radialen Anteil und zum Bereitstellen eines Radius (r) als radialem Anteil des Signals (s) und
- die Konstellationserkennungs-Einrichtung (15) ausgebildet ist, aus dem Radius (r) die Konstellation (16-QAM; 32-QAM; ...) des Signals (s) zu bestimmen.

2. Vorrichtung nach Anspruch 1, bei welcher der Umsetzer (8) als ein CORDIC ausgebildet ist.

3. Vorrichtung nach Anspruch 1 oder 2, bei welcher ein Abgriff vor einem Entscheider (9) angeordnet ist zum Anlegen des Radius (r) an die Konstellationserkennungs-Einrichtung (15).

4. Vorrichtung nach Anspruch 3, bei welcher ein Ausgang der Konstellationserkennungs-Einrichtung (15) an den Entscheider (9) angelegt ist zum Anlegen einer mittels der Konstellationserkennungs-Einrichtung (15) bestimmten Konstellationsinformation (ci) zur Berücksichtigung beim Entscheiden eines Symbols (d).

5. Vorrichtung nach einem vorstehenden Anspruch mit einer Verstärkungsregelungseinrichtung (3) zum Regeln des Signals (s) oder des vorverarbeiteten Signals (s) auf einen mittleren Radiuswert.

6. Verfahren zum Bestimmen einer Konstellation eines quadraturamplituden-modulierten Signals (s) aus einer Vielzahl möglicher Konstellationen,
**dadurch gekennzeichnet, dass**
- das Signal (s) aus einem kartesischen Koordinatenraum in einen radialen Anteil aufweisende, insbesondere polare Koordinaten (r, Φ) umgesetzt wird und ein Radius (r) als radialer Anteil des Signals (s) bereitgestellt wird und
- aus dem Radius (r) die Konstellation des Signals (s) bestimmt wird.

7. Verfahren nach Anspruch 6, bei dem zum Umsetzen ein CORDIC verwendet wird.

8. Verfahren nach Anspruch 6 oder 7, bei dem der Radius (r) vor dem Zuführen zu einem Entscheider abgegriffen und einer Konstellationserkennung zugeführt wird.

9. Verfahren nach Anspruch 8, bei dem eine Konstellationsinformation, die mittels des Radius der dem Signal (s) zugrunde liegenden Konstellation entsprechend bestimmt wurde, zur Entscheidung eines Symbols verwendet wird.

10. Verfahren nach einem der Ansprüche 6 bis 9, bei dem das Signal (s) oder das vorverarbeitete Signal (s) auf einen mittleren Radiuswert geregelt, insbesondere normiert wird.

11. Verfahren nach einem der Ansprüche 6 bis 10, wobei die Konstellation anhand eines Verteilungsmusters der möglichen Konstellationen durch deren verschiedene radiale Verteilungen der möglichen Konstellationen bestimmt wird.

12. Verfahren nach Anspruch 11, wobei die Konstellation durch eine Korrelation mit Korrelationsmustern der möglichen Korrelationen bestimmt wird.

13. Verfahren nach Anspruch 11, wobei die Konstellation durch Auszählung von Bin-Populationen vorgegebener Amplitudenbereiche relativ zu anderen Amplitudenbereichen bestimmt wird.

14. Vorrichtung nach einem der Ansprüche 1 bis 5 bzw. Verfahren nach einem der Ansprüche 6 bis 13 zum'Bestimmen der Konstellation einer QPSK, 16-QAM, 32-QAM, 64-QAM, 128-QAM, 256-QAM oder 512-QAM.
